Europäisches Patentamt

European Patent Office

Office européen des brevets

(19)

(11) Veröffentlichungsnummer: **0 076 981**
**B1**

(12) EUROPÄISCHE PATENTSCHRIFT

(45) Veröffentlichungstag der Patentschrift:
27.12.84

(51) Int. Cl.³: **H 04 N 5/60**

(21) Anmeldenummer: 82109071.9

(22) Anmeldetag: 30.09.82

(54) Pilotton-Demodulator für den Stereo-Fernsehempfang.

(30) Priorität: 01.10.81 DE 3139157

(43) Veröffentlichungstag der Anmeldung:
20.04.83 Patentblatt 83/16

(45) Bekanntmachung des Hinweises auf die Patenterteilung:
27.12.84 Patentblatt 84/52

(84) Benannte Vertragsstaaten:
DE GB IT SE

(56) Entgegenhaltungen:
FUNKSCHAU, Heft 17, August 1981, Seiten 73-77,
München, DE. P. DAMBACHER et al.: "Aufwertung.
Zweitonverfahren für das Fernsehen"

(73) Patentinhaber: Siemens Aktiengesellschaft, Berlin und
München Wittelsbacherplatz 2, D-8000 München 2 (DE)

(72) Erfinder: Stepp, Richard, Dipl.-Ing., Elisabethstrasse 25,
D-8000 München 40 (DE)

## Beschreibung

In der Literaturstelle „Funkschau", 17/1981, S. 73-77, sind Schaltungen für den Fernseh-2-Kanal-Tonempfang beschrieben, der eine Parallele zum Stereorundfunkempfang bildet. Bei solchen Schaltungen ist die Demodulation eines amplitudenmodulierten Pilottonsignals erforderlich.

Nun ist bei der Demodulation des amplitudenmodulierten Pilottonsignals in Anbetracht auf das beim Empfang zu erwartende Störspektrum und S/N-Verhältnis (S = Signalamplitude/Rauschamplitude) eine hohe Selektion erforderlich, was angesichts des zur Verfügung stehenden Standes der Technik eine Demodulatorschaltung mit einem grossen Aufwand an Filtern sowie für den Abgleich verlangt. Es wäre deshalb eine Schaltung für einen Demodulator für das empfangene Pilottonsignal $f_p$ wünschenswert, welche bezüglich des Abgleichs im Vergleich zu den bekannten Möglichkeiten unkritisch ist und die hinsichtlich des Filteraufwands keine grossen Anforderungen stellt.

Mit der Angabe einer solchen Schaltung befasst sich die vorliegende Erfindung. Ausserdem bringt die von der Erfindung vorgeschlagene Schaltung automatisch eine Kompensation von thermischen Effekten und stellt nur geringe Anforderungen an die Toleranz der Eigenschaften der in der Schaltung verwendeten Elemente.

Die Erfindung betrifft somit einen Pilottondemodulator für den Stereofernsehempfang bzw. Fernseh-2-Kanal-Tonempfang, welche dadurch gekennzeichnet ist, dass ein mit dem Bildsignal auf den Empfänger übertragenes periodisches Signal als Sollwert für einen nach dem Frequenzsyntheseverfahren funktionierenden Regelkreis verwendet und an den Sollwerteingang des Phasendetektors dieses Regelkreises angeschaltet ist, dass dabei der Ausgang des Nachlaufoszillators dieses Regelkreises über einen steuerbaren Phasenschieber mit dem Istwerteingang des Phasendetektors verbunden ist, dass ausserdem das zu demodulierende Signal zur Beaufschlagung zweier Mischstufen vorgesehen ist, deren anderer Signaleingang durch ein vom Ausgang des Nachlaufoszillators stammendes Signal beaufschlagt ist, derart, dass dieses Oszillatorsignal der ersten Mischstufe unmittelbar und der zweiten Mischstufe mit einer Phasendrehung um 90° zugeführt ist, und dass schliesslich das Ausgangssignal der ersten Mischstufe unter Vermittlung eines Tiefpasses dem den Betriebszustand des Phasenschiebers steuernden Eingang desselben zugeführt ist, während das demodulierte Signal am Ausgang eines durch den Ausgang der zweiten Mischstufe gesteuerten weiteren Tiefpasses abnehmbar ist.

Dabei kann in bekannter Weise das vom Ausgang des Nachlaufoszillators stammende Signal über einen gemeinsamen ersten Frequenzteiler den beiden Mischstufen zugeführt werden. Ebenso kann das vom Ausgang des Nachlaufoszillators abgegebene Signal dem steuerbaren Phasenschieber über einen anderen Frequenzteiler zugeführt sein.

Als Sollwertsignal steht in der Praxis die den Zeilenrücklauf bei der Bildwiedergabe steuernde periodische Impulsfolge zur Verfügung, die – ebenso wie das zu demodulierende Pilottonsignal – einen Bestandteil des empfangenen Fernsehsignals bildet.

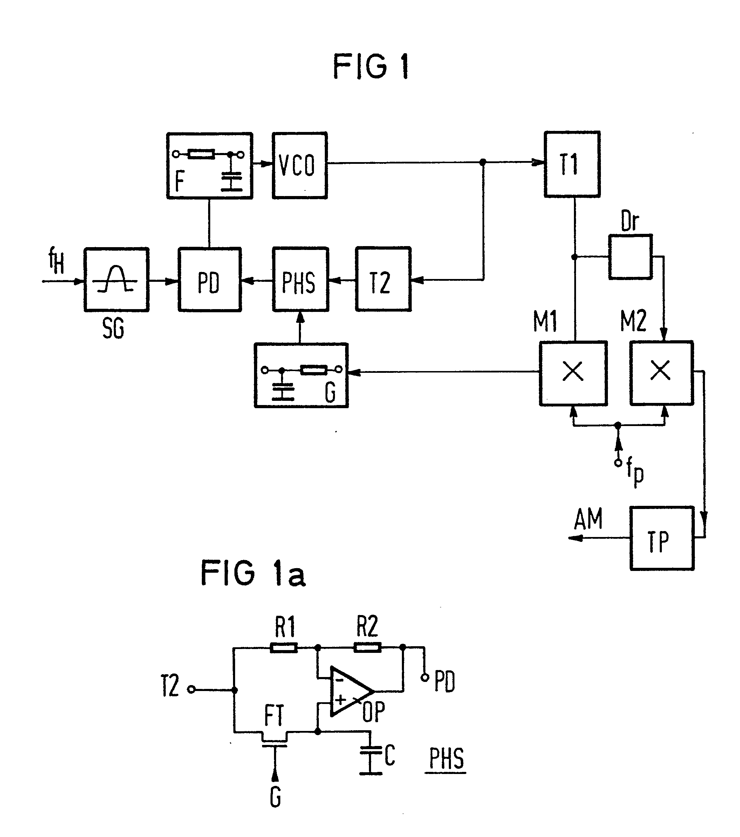

In Fig. 1 ist das Blockschaltbild eines der Erfindung entsprechenden Pilottonsignaldemodulators und in Fig. 1a ein Beispiel für den Phasenschieber dargestellt. Die Erfindung wird nun anhand der Zeichnungen näher beschrieben.

Das zu demodulierende Pilottonsignal $f_p$, das in der vom Stereorundfunkempfang bekannten Weise aus dem empfangenen Audiosignal des zweiten Tonträgers gewonnen wird, liegt gleichzeitig an dem Signaleingang zweier Mischstufen M1 und M2, die in gleicher Weise ausgestaltet sind. Ein Beispiel für solche Mischstufen ist in dem Datenbuch von Siemens „Integrierte Schaltungen für die Unterhaltungselektronik" (1980/81), S. 294 und 295. Das zu demodulierende Pilottonsignal $f_P$ wird den beiden Mischstufen M1 und M2 in derselben Weise zugeführt.

Zur Steuerung des jeweils anderen Eingangs der beiden Mischstufen M1 und M2 dient ein vom Ausgang des im PLL-Regelkreis vorgesehenen Nachlaufoszillators VCO geliefertes Signal, das der ersten Mischstufe M1 direkt und der zweiten Mischstufe um 90° gedreht zugeführt wird. Hierzu ist ein Phasendreher Dr vorgesehen, der bekanntlich auf verschiedene Weise realisiert sein kann. So besteht die Möglichkeit, hierzu einen Operationsverstärker zu verwenden. Eine andere Möglichkeit ist gegeben, wenn man, wie in Fig. 1 angezeigt, das vom Ausgang des Nachlaufoszillators VCO gelieferte Signal den beiden Mischstufen M1 und M2 unter Vermittlung eines gemeinsamen Frequenzteilers T1 zuführt. Dann besteht die Möglichkeit, die Phasendrehung um 90° aus den Ausgängen des durch eine Kette hintereinandergeschalteter Flip-Flops realisierten Teilers T1 abzuleiten. Beispielsweise kann man den Ausgang der vorletzten Teilerstufe von T1 zur Steuerung von M1 und zugleich zur Steuerung des einen Eingangs eines logischen Exklusiv-ODER-Gatters verwenden. Der zweite Eingang dieses EXOR-Gatters wird durch den entsprechenden Ausgang der letzten Teilerstufe beaufschlagt, während das zur Steuerung der zweiten Mischstufe dienende phasenverschobene Signal am Ausgang des EXOR-Gatters erscheint. Daneben gibt es noch weitere bekannte Möglichkeiten, um die für die Steuerung von M2 erwünschte Phasendrehung um 90° zu erreichen.

Für die nach dem Frequenzsyntheseverfahren (d.h. also dem PLL-Verfahren) arbeitende, den Nachlaufoszillator VCO als Stellglied und als Istwertgeber enthaltende Regelschleife ist gegenüber den üblichen Ausgestaltungen solcher Regelschleifen lediglich zu bemerken, dass der vom Nachlaufoszillator VCO entweder unmittelbar oder über einen weiteren Frequenzteiler T2 zugeführte Istwert nicht unmittelbar, sondern über ei-

2

nen Phasenschieber PHS an den Istwerteingang des die Regelabweichung feststellenden Phasendetektors PD gelegt ist. Dieser Phasenschieber PHS wird ausserdem durch ein vom Ausgang des ersten Mischers M1 geliefertes und über einen dritten Tiefpass der Schaltung, nämlich den Tiefpass G, zugeführtes Signal eingestellt.

Der Phasenschieber PHS kann z.B. in einer aus dem Buch „Halbleiter-Schaltungstechnik" (1980) von Tietze und Schenk (vgl. S. 320 und 321) bekannten Weise realisiert sein. Dieser Ausgestaltung entspricht die aus der Fig. 1a ersichtliche Schaltung. Sie enthält einen Operationsverstärker OP, der in der gezeichneten Weise gegengekoppelt, vom Frequenzteiler T2 bzw. dem Ausgang von VCO beaufschlagt und zur Steuerung des Phasendetektors PD vorgesehen ist. Der zur Steuerung des Phasenschiebers PHS dienende Eingang desselben ist hier durch das Gate eines als Potentiometer dienenden Feldeffekttransistors FT gegeben. Neben den Kopplungswiderständen R1 und R2 enthält die Schaltung noch den zum Bezugspotential führenden Kondensator C.

Eine andere Realisierung des Phasenschiebers PHS kann durch ein Monoflop mit regelbarer Verzögerung gegeben sein.

Als Sollwert für die PLL-Regelschleife ist das periodisch von dem bildverarbeitenden Teil SG des Fernsehempfängers zur Verfügung gestellte und aus diskreten Impulsen bestehende Horizontalablenksignal $f_H$ verwendet, das an den Sollwerteingang des Phasendetektors PD gelegt ist. Dieser Phasendetektor PD steuert über einen weiteren Tiefpass der Schaltung, nämlich dem Integrator F, die Einstellung des Nachlaufoszillators VCO, der wie oben angedeutet das Stellglied des PLL-Reglers darstellt.

Der Ausgang der ersten Mischstufe M1 steuert unter Vermittlung des Tiefpasses G die Einstellung des Phasenschiebers PHS (z.B. das Gate des Feldeffekttransistors FT in Fig. 1a). Der Ausgang der zweiten Mischstufe M2 liefert unter Vermittlung des Tiefpasses TP das gewünschte demodulierte Signal AM.

Bei dem der erfindungsgemässen Schaltung zugrunde liegenden System wird ersichtlich die Pilottonträgerfrequenz $f_P$ mit den Zeilenrücklaufimpulsen $f_H$ synchronisiert. Ausserdem wird in einer weiteren Regelschleife die Phase nachgeführt. Erreicht ist dadurch, dass Massnahmen zur Erzielung eines Abgleichs nicht erforderlich sind, dass ausserdem der thermische Einfluss auf die erhaltenen Signale AM automatisch kompensiert ist und dass schliesslich bezüglich der Toleranzen der zu verwendenden Bauteile in der Schaltung keine engen Anforderungen gestellt werden müssen.

Bei einer der Erfindung entsprechenden Schaltung wird die Pilottonträgerfrequenz mit Hilfe eines digitalen PLL-Synthesizers erzeugt, wobei als Referenzfreqenz die Zeilenrücklaufimpulse $f_H$ verwendet sind. Der Fernsehempfänger ist dabei auf die Horizontalfrequenz oder eine sonstige, ggf. als Istwert anstelle von $f_H$ einsetzbare Frequenz synchronisiert. Der PLL-Synthesizer besteht aus dem Nachlaufoszillator, d.h. einem spannungsgesteuerten Oszillator VCO, der vom Ausgang des die Regelabweichung überwachenden Phasendetektors PD über das Loopfilter F gesteuert wird. Ausserdem enthält der PLL-Regelkreis den Phasenschieber PHS unmittelbar vor dem Istwerteingang des Phasendetektors PD. Im ersten Mischer M1 wird die Phase der empfangenen Pilottonträgerfrequenz $f_P$ mit der Phase der intern in dem PLL-Regelkreis im Nachlaufoszillator VCO erzeugten Pilotfrequenz verglichen und über das Filter G und dem Phasenschieber PHS nachgeregelt. Über eine grosse Zeitkonstante im Filter G wird damit eine sehr schmalbandige Anordnung mit unkritischen Bauelementen und ohne Abgleich erreicht. Mit der so in VCO erzeugten Pilottonfrequenz wird im zweiten Mischer M2 das Pilottonsignal $f_P$ demoduliert.

Einzelheiten hinsichtlich der Ausgestaltung des Phasendetektors PD, der Frequenzteiler T1, T2, der Ausgestaltung der Filter PD, F und G sind Stand der Technik, was im Prinzip auch für den Phasendreher Dr gilt. Weitere Einzelheiten brauchen deshalb hier nicht genannt zu werden. Eine günstige Ausgestaltung für eine nach dem Nachlaufsynchronisationsverfahren (PLL-Verfahren) arbeitende Schaltung findet man in der Patentanmeldung P Nr. 3120930.0 (= VPA 81 P 1071). Der Stand der Technik bezüglich solcher PLL-Regelschaltungen ist z.B. auch in dem genannten Buch „Halbleiterschaltungstechnik" von Tietze und Schenk auf S. 701-714 beschrieben.

**Patentansprüche**

1. Pilottonsignaldemodulator für den Stereofernsehempfang bzw. Fernseh-2-Kanal-Tonempfang, dadurch gekennzeichnet, dass ein mit dem Bildsignal auf den Empfänger übertragenes periodisches Signal ($f_H$) als Sollwert für einen nach dem Frequenzsyntheseverfahren (PLL-Verfahren) funktionierenden Regelkreis verwendet und an den Sollwerteingang des Phasendetektors (PD) dieses Regelkreises angeschaltet ist, dass dabei der Ausgang des Nachlaufoszillators (VCO) dieses Regelkreises über einen steuerbaren Phasenschieber (PHS) mit dem Istwerteingang des Phasendetektors (PD) verbunden ist, dass ausserdem das zu demodulierende Signal ($f_P$) zur Beaufschlagung zweier Mischstufen (M1, M2) vorgesehen ist, deren anderer Signaleingang durch ein vom Ausgang des Nachlaufoszillators (VCO) stammendes Signal beaufschlagt ist, derart, dass dieses Oszillatorsignal der ersten Mischstufe (M1) unmittelbar und der zweiten Mischstufe (M2) mit einer Phasendrehung um 90° zugeführt ist, und dass schliesslich das Ausgangssignal der ersten Mischstufe (M1) unter Vermittlung eines Tiefpasses (G) dem den Betriebszustand des Phasenschiebers (PHS) steuernden Eingang desselben zugeführt ist, während das demodulierte Signal (AM) am Ausgang eines durch den Ausgang der zweiten Mischstufe (M2) gesteuerten weiteren Tiefpasses (TP) abnehmbar ist.

2. Demodulatorschaltung nach Anspruch 1, dadurch gekennzeichnet, dass das vom Nachlaufoszillator (VCO) abgegebene Signal den beiden Mischstufen (M1, M2) unter Vermittlung eines Frequenzteilers (T1) zugeführt ist.

3. Demodulatorschaltung nach einem der beiden Ansprüche 1 oder 2, dadurch gekennzeichnet, dass die Beaufschlagung des Phasenschiebers (PHS) durch die erste Mischstufe (M1) unter Vermittlung einer Filterschaltung (G) erfolgt.

4. Demodulatorschaltung nach einem der Ansprüche 1 bis 3, dadurch gekennzeichnet, dass als Istwert für die Regelung nach dem Frequenzsyntheseverfahren das vom Bildwiedergabeteil (SG) gelieferte Signal ($f_H$) für die Steuerung der horizontalen Ablenkung an den Sollwerteingang des Phasendetektors (PD) gelegt ist.

5. Demodulatorschaltung nach einem der Ansprüche 1 bis 4, dadurch gekennzeichnet, dass der Phasenschieber (PHS) vom Ausgang des Nachlaufoszillators (VCO) über einen weiteren Frequenzteiler (T2) beaufschlagt ist.

## Claims

1. A pilot signal demodulator for stereo television reception or television-2-channel sound reception, as the case may be, characterised in that a periodic signal ($f_H$) transmitted to the receiver with a video signal is used as a theoretical value for a control circuit functioning in accordance with frequency synthesis techniques (PLL system), connected to the theoretical value input of the phase detector (PD) of said control circuit, that the output of the follow-up oscillator (VCO) of this control circuit is connected to the actual value input of the phase detector (PD) *via* a controllable phase shifter (PHS), that further the signal ($f_P$) to be demodulated serves to set two mixer stages (M1, M2) whose other signal inputs are influenced by a signal from the output of the follow-up oscillator (VCO) in such a manner that this oscillator signal is fed directly to the first mixer stage (M1) and with a phase shift of 90° to the second mixer stage (M2), and the output signal of the first mixer stage (M1) is finally fed to the input of the phase shifter (PHS) *via* a low-pass filter (G) to control the operating state of the phase shifter (PHS), whereas the demodulated signal (AM) can be tapped at the output of a further low-pass filter (TP) controlled by the output of the second mixer stage (M2).

2. A demodulator circuit as claimed in Claim 1, characterised in that the signal transmitted by the follow-up oscillator (VCO) is fed to the two mixer stages (M1, M2) *via* a frequency divider (T1).

3. A demodulator circuit as claimed in Claim 1 or 2, characterised in that the setting of the phase shifter (PHS) by the first mixer stage (M1) is effected *via* a filter circuit (G).

4. A demodulator circuit as claimed in one of Claims 1 to 3, characterised in that as an actual value for the control in accordance with frequency synthesis techniques, the signal ($f_H$) supplied by the video stage (SG) for the control of horizontal deflection is connected to the theoretical value input of the phase detector (PD).

5. A demodulator circuit as claimed in one of Claims 1 to 4, characterised in that the phase shifter (PHS) is set by the output of the follow-up oscillator (VCO) *via* a further frequency divider (T2).

## Revendications

1. Démodulateur pour signal d'onde pilote pour la réception de la télévision stéréophonique ou la réception de la télévision à deux canaux audio, caractérisé par le fait qu'un signal périodique ($f_H$), transmis avec le signal vidéo sur le récepteur, est utilisé comme valeur de consigne pour le circuit de réglage fonctionnant selon le procédé à synthèse de la fréquence (procédé PLL) et est appliqué à l'entrée de valeur de consigne du comparateur de phase (PD) de ce circuit de réglage, que, ce faisant, la sortie de l'oscillateur asservi (VCO) de ce circuit de réglage est reliée par l'intermédiaire d'un déphaseur réglable (PHS) à l'entrée des valeurs instantanées du comparateur de phase (PD), qu'en outre le signal ($f_P$) à démodulateur est prévu pour alimenter deux étages mélangeurs (M1, M2) dont l'autre entrée des signaux est chargée par le signal provenant de la sortie de l'oscillateur asservi (VCO) de manière que ce signal d'oscillateur soit appliqué directement au premier étage mélangeur (M1) et avec un déphasage de 90° au second étage mélangeur (M2), et que finalement le signal de sortie du premier étage mélangeur (M1) soit appliqué, par l'intermédiaire d'un passe-bas (G), à l'entrée de ce dernier qui commande l'état de fonctionnement du déphaseur (PHS), alors que le signal démodulé (AM) peut être prélevé à la sortie d'un second passebas (TP) commandé par la sortie du second étage mélangeur (M2).

2. Circuit démodulateur selon la revendication 1, caractérisé par le fait que le signal fourni par l'oscillateur asservi (VCO) est appliqué aux deux étages mélangeurs (M1, M2) par l'intermédiaire d'un diviseur de fréquence (T1).

3. Circuit démodulateur selon l'une des revendications 1 ou 2, caractérisé par le fait que la charge du déphaseur (PHS) a lieu par le premier étage mélangeur (M1), avec interposition d'un circuit filtrant (G).

4. Circuit démodulateur selon l'une des revendications 1 à 3, caractérisé par le fait que, en tant que valeur instantanée pour le réglage selon le procédé à synthèse de fréquence, le signal ($f_H$) fourni par la partie de restitution (SG) de l'image est appliqué pour la commande de la déviation horizontale à l'entrée des valeurs de consigne du comparateur de phase (PD).

5. Circuit démodulateur selon l'une des revendications 1 à 4, caractérisé par le fait que le déphaseur (PHS) est chargé par la sortie de l'oscillateur asservi (VCO), par l'intermédiaire d'un second diviseur de fréquence (T2).

# FIG 1

# FIG 1a

PHS